(19) Europäisches Patentamt
European Patent Office
Office européen des brevets

(11) Veröffentlichungsnummer : **0 033 361**
**B1**

(12) # EUROPÄISCHE PATENTSCHRIFT

(45) Veröffentlichungstag der Patentschrift : **18.01.84**

(51) Int. Cl.³ : **C 08 K 9/10**, C 08 L 75/04, C 08 K 3/32

(21) Anmeldenummer : **80106518.6**

(22) Anmeldetag : **24.10.80**

(54) **Flammschutzmittel auf der Basis von Ammoniumpolyphosphaten.**

(30) Priorität : **08.12.79 DE 2949537**

(43) Veröffentlichungstag der Anmeldung : **12.08.81 Patentblatt 81/32**

(45) Bekanntmachung des Hinweises auf die Patenterteilung : **18.01.84 Patentblatt 84/03**

(84) Benannte Vertragsstaaten :
**AT BE CH DE FR GB IT LI NL SE**

(56) Entgegenhaltungen :
**US-A- 3 423 343**
**US-A- 4 097 400**

(73) Patentinhaber : **HOECHST AKTIENGESELLSCHAFT**
**Postfach 80 03 20**
**D-6230 Frankfurt am Main 80 (DE)**

(72) Erfinder : **Staendeke, Horst, Dr.**
**von-Meer-Strasse 15**
**D-5042 Erftstadt (DE)**
Erfinder : **Dany, Franz-Josef, Dr.**
**Heddinghovener Strasse 47**
**D-5042 Erftstadt (DE)**
Erfinder : **Kandler, Joachim, Dr.**
**Amselweg 10**
**D-5042 Erftstadt (DE)**
Erfinder : **Adam, Wilhelm, Dr.**
**Schwalbenstrasse 15**
**D-6078 Neu-Isenburg (DE)**

**EP 0 033 361 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Flammschutzmittel auf der Basis von Ammoniumpolyphosphaten

Gegenstand der Erfindung ist ein teilchenförmiges Mittel auf der Basis von freifließenden, pulverförmigen Ammoniumpolyphosphaten zur Verhinderung der Brennbarkeit von brennbaren Stoffen.

Es ist generell bekannt, Ammoniumpolyphosphate als Flammschutzmittel für Kunststoffe zu verwenden. Beispielsweise beschreibt die Deutsche Auslegeschrift 12 83 532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel $H_{(n-m)+2}(NH_4)_mP_nO_{3n+1}$, in der n eine ganze Zahl mit einem über 10 liegenden Durchschnittswert ist, m eine ganze Zahl bis maximal n + 2 bedeutet und m/n zwischen etwa 0,7 und 1,1 liegt, als Flammschutzmittel-Zusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, daß sie nicht ausreichend wasserunlöslich sind und deshalb im Laufe der Zeit durch Witterungseinflüsse aus dem Kunststoff ausgewaschen werden. Wie aus Spalte 3 der DE-AS 12 83 532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 $cm^3$ Wasser bei 25 °C bis zu 5 g des Ammoniumpolyphosphates gelöst werden, d. h. daß die löslichen Anteile des Ammoniumpolyphosphates bis zu 50 % der eingesetzten Menge betragen.

Es bestand somit die Aufgabe, Mittel und Wege zur Verminderung der Löslichkeit von Ammoniumpolyphosphaten in Wasser zu finden, so daß die Gefahr des Auswaschens des Ammoniumpolyphosphates beim Einsatz als Flammschutzmittel in Kunststoffen durch Witterungseinflüsse möglichst weitgehend vermieden wird. Mit vorliegender Erfindung wird ein geeigneter Weg zur Lösung des genannten Problems aufgezeigt.

Gegenstand der Erfindung ist ein teilchenförmiges Mittel auf der Basis von freifließenden, pulverförmigen Ammoniumpolyphosphaten der allgemeinen Formel $H_{(n-m)+2}(NH_4)_mP_nO_{3n+1}$, in welcher n eine ganze Zahl mit einem Durchschnittswert von 20 bis 800 bedeutet und das Verhältnis von m zu n etwa 1 beträgt, zur Verhinderung der Brennbarkeit von brennbaren Stoffen, welches dadurch gekennzeichnet ist, daß es aus

a) 75 bis 99 Gew.% Ammoniumpolyphosphat und

b) 1 bis 25 Gew.% eines gehärteten, wasserunlöslichen Polykondensationsproduktes aus Melamin und Formaldehyd, welches die einzelnen Ammoniumpolyphosphatteilchen umhüllt,

besteht.

Das Mittel der Erfindung besitzt im allgemeinen eine mittlere Teilchengröße von 0,01 bis 0,05 mm und der Kondensationsgrad n des Ammoniumpolyphosphates ist vorzugsweise eine ganze Zahl mit einem Durchschnittswert von 100 bis 500, bestimmt nach dem Endgruppen-Titrationsverfahren (von Wazer, Griffiter und Mc Cullough, Anal. Chem. 26, Seite 1755 (1954)).

Entsprechend einer weiteren bevorzugten Ausführungsform des erfindungsgemäßen Mittels beträgt der Anteil des Polykondensationsproduktes im Mittel 2,5 bis 10 Gew.%.

Das Polykondensationsprodukt kann auch ein teilveräthertes, beispielsweise ein methyl- oder äthylveräthertes Produkt sein.

Insbesondere erwies sich ein Polykondensationsprodukt als geeignet, das im ungehärteten Zustand ein Pulver darstellt, dessen 50 gew.%ige wässerige Lösung eine dynamische Viskosität von 20 mPas, einen pH-Wert bei 20 °C von 8,8 bis 9,8 und eine Dichte bei 20 °C von 1,21 bis 1,225 (g/ml) besitzt und im Handel als ®Madurit MW 390 der Firma Cassella Aktiengesellschaft, Frankfurt/Main erhältlich ist.

Schließlich betrifft die Erfindung auch die Verwendung des vorbeschriebenen Mittels zum Flammfestmachen von Polyurethanen bzw. Polyurethanschäumen, wobei der Gehalt des Mittels im Polyurethanschaum 5 bis 50 Gew.%, bezogen auf die Menge der alkoholischen Komponente des Polyurethans, beträgt.

Das Aufbringen des Melamin/Formaldehyd-Harzes auf die Ammoniumpolyphosphat-Teilchen kann beispielsweise derart erfolgen, daß man zunächst das Ammoniumpolyphosphat in Methanol suspendiert, die Suspension bis zu einem schwachen Rückfluß des Methanols erhitzt und anschließend in die Suspension eine methanolisch/wäßrige Lösung des Melamin/Formaldehyd-Harzes eintropft. Nach Ablauf einer Nachreaktionszeit von beispielsweise 0,5 bis 2 Stunden wird die Suspension filtriert und der Filterrückstand im Stickstoffstrom bei 100 °C während 150 bis 180 Minuten getrocknet. Während der Trocknung erfolgt gleichzeitig die Aushärtung des auf die Ammoniumpolyphosphat-Teilchen aufgebrachten Harzüberzuges.

Das derart verkapselte Ammoniumpolyphosphat besitzt den Vorteil, daß es praktisch wasserunlöslich ist und in dieser Form beispielsweise für den Einsatz als Flammschutzmittel in Polyurethanschäumen prädestiniert ist. Die Löslichkeitsunterschiede von erfindungsgemäßem Mittel und kerkömmlichen Ammoniumpolyphosphaten werden in den nachfolgenden Beispielen dokumentiert.

Durch die Verkapselung des Ammoniumpolyphosphates wird dessen bekannte ursprüngliche Wirksamkeit als Flammschutzmittel für Kunststoffe, insbesondere für Polyurethane, in keiner Weise beeinträchtigt, so daß die Verwendung des erfindungsgemäßen Mittels als Flammschutzmittel eine Bereicherung des Standes der Technik darstellt.

Beispiel 1

In einem mit Rührer und Rückflußkühler ausgestatteten Glasgefäß wurden 150 g Ammoniumpolyphosphat mit einem Kondensationsgrad n ~ 700 (®Exolit 263, Hoechst Aktiengesellschaft, Frankfurt/Main) in 600 ml Methanol suspendiert und die Suspension erhitzt, bis ein schwacher Rückfluß des Methanols erkennbar war. Anschließend wurden in die Suspension unter Rühren 100 ml einer methanolisch/wäßrigen Lösung von 7,5 g eines Melamin/Formaldehyd-Harzes (®Madurit MW 390, Cassella Aktiengesellschaft, Frankfurt/Main) im Verlauf von 15 Minuten eingetropft. Nach einer weiteren Nachreaktionszeit von 2 Stunden wurde filtriert und der Filterrückstand im Stickstoffstrom bei 100 °C 120 Minuten getrocknet, wobei der Harzüberzug auf den Phosphat-Teilchen aushärtete.

Es wurden 149,9 g Produkt mit einem Melamin/Formaldehyd-Harzanteil von 5 Gew.% erhalten.

Zur Bestimmung der wasserlöslichen Anteile des erhaltenen Produktes wurde eine Probe von 10 g entnommen, letztere in 100 ml Wasser suspendiert und die Suspension 20 Minuten bei 25 °C gerührt. Anschließend wurde der im Wasser ungelöste Anteil des Produktes innerhalb von 40 Minuten sedimentiert und die Lösung dekantiert. 50 ml der noch trüben Lösung wurden in ein Zentrifugenglas gegeben und 40 Minuten bei 15 000 Upm zentrifugiert. Dann wurden 5 ml der zentrifugierten, klaren Lösung in eine gewogene Aluminiumschale pipettiert und bei 120 °C im Trockenschrank eingedampft. Aus der Menge des Trockenrückstandes wurde die Löslichkeit des hergestellten Produktes im Wasser berechnet. Der Wert für die Löslichkeit ist in der Tabelle dargestellt.

Beispiel 2

200 g des Ammoniumpolyphosphates entsprechend Beispiel 1 wurden in einem beheizten Kneter auf 100 °C erwärmt und anschließend im Verlauf von 15 Minuten mit 100 ml einer methanolisch/wäßrigen Lösung, welche 5 g des in Beispiel 1 genannten Melamin/Formaldehyd-Harzes enthielt, versetzt. Das Gemisch wurde 2 Stunden bei 100°-150 °C geknetet, wobei das Lösungsmittel verdampfte und das Harz aushärtete. Es wurden 200 g verkapseltes Ammoniumpolyphosphat mit einem Harzanteil von 2,5 Gew.% erhalten.

Das Ergebnis des Löslichkeitstestes nach Beispiel 1 für dieses Produkt ist in der Tabelle dargestellt.

Beispiel 3

Es wurde analog Beispiel 2 verfahren, wobei jedoch 10 g des Melamin/Formaldehyd-Harzes eingesetzt wurden. Die Produktausbeute betrug 203 g, wobei das Produkt einen Harzanteil von 4,9 Gew.% auswies.

Das Ergebnis des Löslichkeitstestes nach Beispiel 1 für dieses Produkt ist in der Tabelle dargestellt.

Beispiel 4

Es wurde analog Beispiel 2 verfahren, wobei jedoch 20 g des Melamin/Formaldehyd-Harzes eingesetzt wurden. Die Produktausbeute betrug 211 g, wobei das Produkt einen Harzanteil von 9,5 Gew.% auswies.

Das Ergebnis des Löslichkeitstestes nach Beispiel 1 für dieses Produkt ist in der Tabelle dargestellt.

Beispiel 5

Es wurde analog Beispiel 2 verfahren, wobei jedoch 40 g des Melamin/Formaldehyd-Harzes eingesetzt wurden. Die Produktausbeute betrug 225 g, wobei das Produkt einen Harzanteil von 17,8 Gew.% auswies.

Das Ergebnis des Löslichkeitstestes nach Beispiel 1 für dieses Produkt ist in der Tabelle dargestellt.

Beispiel 6 (Vergleichsbeispiel)

Es wurde analog Beispiel 2 verfahren, wobei jedoch kein Melamin/Formaldehyd-Harz zugesetzt wurde.

Das Ergebnis des Löslichkeitstestes nach Beispiel 1 für dieses Produkt ist in der Tabelle dargestellt :

(Siehe Tabelle Seite 4 f.)

Tabelle

| Beispiel | I | II | III |
|---|---|---|---|
| 1 | 5,0 | 13,0 | — |
| 2 | 2,5 | 12,0 | – 45,0 |
| 3 | 4,9 | 9,4 | – 57,0 |
| 4 | 9,5 | 5,2 | – 76,0 |
| 5 | 17,8 | 4,2 | – 81,0 |
| 6 | — | 22,0 | — |

Spalte I : Anteil des Melamin/Formaldehyd-Harzes im Endprodukt (Gew.%)

Spalte II : Lösliche Anteile des Endproduktes in Wasser (Gew.%) gemäß Löslichkeitstest nach Beispiel 1

Spalte III : Prozentuale Abnahme der wasserlöslichen Anteile der erfindungsgemäßen Produkte nach Beispielen 2-5 im Vergleich zur Wasserlöslichkeit des Vergleichsproduktes nach Beispiel 6.

Aus der Tabelle geht hervor, daß bei den Beispielen 2-5 mit zunehmendem Melamin/Formaldehyd-Harzanteil im Endprodukt der wasserlösliche Anteil des Ammoniumpolyphosphates abnimmt. Im Vergleich zu dem unbehandelten Ammoniumpolyphosphat gemäß Beispiel 6 besitzen die erfindungsgemäßen Produkte eine erheblich geringere Wasserlöslichkeit.

## Ansprüche

1. Teilchenförmiges Mittel auf der Basis von freifließenden, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von 20 bis 800 bedeutet und das Verhältnis von m zu n etwa 1 beträgt, zur Verhinderung der Brennbarkeit von brennbaren Stoffen, dadurch gekennzeichnet, daß es aus

a) 75 bis 99 Gew.% Ammoniumpolyphosphat und

b) 1 bis 25 Gew.% eines gehärteten, wasserunlöslichen Polykondensationsproduktes aus Melamin und Formaldehyd, welches die einzelnen Ammoniumpolyphosphatteilchen umhüllt, besteht.

2. Mittel nach Anspruch 1, dadurch gekennzeichnet, daß es eine mittlere Teilchengröße von 0,01 bis 0,05 mm besitzt.

3. Mittel nach Anspruch 1 oder 2, dadurch gekennzeichnet, daß n eine ganze Zahl mit einem Durchschnittswert von 100 bis 500 ist.

4. Mittel nach Anspruch 1-3, dadurch gekennzeichnet, daß der Anteil des Polykondensationsproduktes 2,5 bis 10 Gew.% beträgt.

5. Mittel nach Anspruch 1-4, dadurch gekennzeichnet, daß das Polykondensationsprodukt ein un- oder teilveräthertes Produkt ist.

6. Mittel nach Anspruch 1-4, dadurch gekennzeichnet, daß das Polykondensationsprodukt im ungehärteten Zustand ein Pulver darstellt, dessen 50 %ige wässerige Lösung eine dynamische Viskosität von 20 mPa.s, einen pH-Wert bei 20 °C von 8,8 bis 9,8 und eine Dichte bei 20 °C von 1,21 bis 1,225 (g/ml) besitzt.

7. Verwendung des Mittels nach Anspruch 1-6 zum Flammfestmachen von Polyurethanen bzw. Polyurethanschäumen, wobei der Gehalt des Mittels im Polyurethanschaum 5 bis 50 Gew.%, bezogen auf die Menge der alkoholischen Komponente des Polyurethans, beträgt.

## Claims

1. Particulate agent based on free-flowing pulverulent ammonium polyphosphates of the general formula

$$H_{(n-m)+2}(NH_4)_mP_nO_{3n+1}$$

in which n is an integer having an average value of 20 to 800 and the ratio of m to n is approximately 1, for impeding the combustibility of combustible materials, consisting of

a) 75 to 99 weight% of ammonium polyphosphate and

b) 1 to 25 weight% of a hardened water-insoluble polycondensation product of melamine and

formaldehyde encasing the individual ammonium polyphosphate particles.

2. Agent as claimed in claim 1, consisting of particles with a mean size of 0.01 to 0.05 mm.

3. Agent as claimed in claim 1 or 2, wherein n is an integer having an average value of 100 to 500.

4. Agent as claimed in claims 1 to 3, wherein the proportion of the polycondensation product is 2.5 to 10 weight%.

5. Agent as claimed in claims 1 to 4, wherein the polycondensation product is a non-etherified or partially etherified product.

6. Agent as claimed in claims 1 to 4, wherein the polycondensation product is, in the unhardened state, a powder of which a 50 weight% aqueous solution has a dynamic viscosity of 20 mPas, a pH-value at 20 °C of 8.8 to 9.8 and a density at 20 °C of 1.21 to 1.225 (g/ml).

7. Use of the agent as claimed in claims 1 to 6 for rendering polyurethanes or polyurethane foams flameproof, the content of the agent in the polyurethane foam being 5 to 50 weight%, based on the amount of the alcoholic component in the polyurethane.

**Revendications**

1. Agent en particules à base de polyphosphates d'ammonium pulvérulents fluides de formule générale

$$H_{(n-m)+2}(NH_4)_mP_nO_{3n+1}$$

dans laquelle n est un nombre entier d'une valeur moyenne de 20-800 et le rapport m/n est d'environ 1, pour empêcher la combustion de matières combustibles, caractérisé en ce qu'il consiste en

a) 75-99 % en poids de polyphosphate d'ammonium et

b) 1-25 % en poids d'un produit de polycondensation durci, insoluble dans l'eau, de mélamine et de formaldéhyde, enrobant les particules individuelles du polyphosphate d'ammonium.

2. Agent selon la revendication 1, caractérisé en ce qu'il présente une granulométrie moyenne de 0,01 à 0,05 mm.

3. Agent selon la revendication 1 ou 2, caractérisé en ce que n est un nombre entier d'une valeur moyenne de 100-500.

4. Agent selon les revendications 1-3, caractérisé en ce que la proportion du produit de polycondensation est de 2,5 à 10 % en poids.

5. Agent selon les revendications 1-4, caractérisé en ce que le produit de polycondensation est un produit non éthérifié ou partiellement éthérifié.

6. Agent selon les revendications 1-4, caractérisé en ce que le produit de polycondensation est à l'état non durci une poudre dont une solution aqueuse à 50 % présente une viscosité dynamique de 20 mPas, un pH à 20 °C de 8,8 à 9,8 et une densité à 20 °C de 1,21-1,225 (g/ml).

7. Utilisation de l'agent selon les revendications 1-6, pour l'ignifugeage de polyuréthannes ou de mousses de polyuréthannes, la teneur en agent dans la mousse de polyuréthanne étant égale à 5-50 % en poids, par rapport à la quantité du composant alcoolique du polyuréthanne.